# FASCICULE DE BREVET EUROPEEN

(11) **EP 0 568 413 B1**
(45) Date de publication et mention de la délivrance du brevet: **04.10.1995**
(21) Numéro de dépôt: 93401022.4
(22) Date de dépôt: 20.04.1993
(51) Int. Cl.: C08J 7/04, B05D 1/36, C08L 83/04

(54) **Procédé de dépôt d'un revêtement de latex sur une pièce en élastomère**
Verfahren zur Beschichtung eines Kautschukgegenstandes mit einer Latexbeschichtung
Process for coating an elastomeric article with a latex coating

(30) Priorité: 30.04.1992 FR 9205387
(43) Date de publication de la demande: 03.11.1993
(73) Titulaire: ISOFORM, F-92800 Puteaux (FR)
(72) Inventeur: Payet, Gérard, F-38200 Chuzelles (FR); Tsangarakis, Constantin, F-69006 Lyon (FR)
(74) Mandataire: Le Guen, Gérard

(56) Documents cités:
- US-A- 3 812 164
- US-A- 3 991 239

## Description

La présente invention se rapporte à un procédé destiné à réaliser un revêtement de latex sur une pièce en élastomère.

Certains élastomères sont fortement hydrophobes. Lorsqu'on les plonge dans une dispersion de latex, celle-ci ne reste pas étalée à la surface de l'élastomère, mais a tendance à former des gouttelettes.

Il est par conséquent impossible de réaliser directement à la surface d'un élastomère de ce type un revêtement de latex sans traitement préalable de l'élastomère.

Le document US-A-3 991 239 décrit ainsi un procédé dans lequel on réalise un traitement de surface de l'élastomère à l'aide d'une solution aqueuse halogénée, destiné à générer des sites polaires hydrophiles permettant l'adhérence de polymères tels que des polybutadiènes à la surface de l'élastomère.

Le document US-A-3 812 164 (J.R. SCHULZ) décrit un procédé de fabrication d'une composition d'élastomère de silicone vulcanisable à température ambiante de façon à fournir une surface pouvant être peinte, notamment par une peinture à base de latex, consistant à mélanger divers composants (polydiméthoxysiloxane, charge, composé contenant du silicium lié à un groupe alkoxy, silane et sel métallique d'un acide carboxylique).

On connait par ailleurs des procédés dans lesquels on coule un élastomère de silicone à l'intérieur d'un sac de latex pour la réalisation de coussins.

La présente invention a pour objet un procédé destiné à former un revêtement de latex sur une pièce en élastomère hydrophobe, caractérisé en ce que l'on dépose à la surface de l'élastomère une couche continue d'une matière pulvérulente minérale hydrophile et en ce que l'on immerge ladite pièce dans une suspension aqueuse de latex.

La quantité de matière minérale hydrophile déposée (en gramme de matière déposée par m² de surface de l'élastomère) peut par exemple être comprise entre 0,01 et 1 g/m².

Avantageusement, la matière pulvérulente minérale hydrophile est choisie parmi les montmorillonites, de préférence sodiques,les silices colloïdales et les silices calcinées.

Le diamètre moyen des particules de la matière pulvérulente minérale hydrophile est de préférence inférieur à 100 micromètres.

Lorsque la matière pulvérulente minérale hydrophile est une montmorillonite sodique, on l'obtient avantageusement à partir de montmorillonites calciques permutées par du CO₃ Na₂, par exemple à 3%.

Avantageusement, on dépose la couche continue de matière pulvérulente minérale hydrophile à la surface de la pièce en élastomère par une méthode connue telle qu'un étalement, par exemple à la main, un poudrage pneumatique électrostatique ou encore par un procédé en lit fluidisé. Lorsque la pièce ainsi revêtue est immergée dans une suspension aqueuse de latex, il se constitue à l'interface entre l'élastomère et la couche de latex un film continu formé par un gel aqueux ayant une grande rigidité rhéologique et une forte viscosité.

Le gel aqueux ainsi formé en raison de sa viscosité élevée, ne sera pas repoussé par l'hydrophobie de la masse d'élastomère.

De préférence, l'élastomère est un élastomère de silicone.

Selon un mode de réalisation avantageux de l'invention, on met en outre en contact la pièce en élastomère hydrophobe revêtue de matière pulvérulente minérale hydrophile avec une solution alcoolique d'un sel destiné à coaguler la dispersion aqueuse de latex. On a ainsi découvert, de façon inattendue, que la matière pulvérulente minérale hydrophile absorbe une grande quantité de sel coagulant permettant d'obtenir une couche de latex coagulé, répartie uniformément sur la surface de la pièce. L'épaisseur de la couche obtenue est par ailleurs supérieure à celle que l'on obtient avec les techniques de trempé dans le latex connues pour une même durée d'immersion.

La présente invention permet notamment de réaliser une enveloppe de latex autour d'une pièce en élastomère de silicone de n'importe quelle dureté shore.

Le mode opératoire, utilisé pour cette forme de réalisation de l'invention, est décrit plus en détail ci-après :
- on prépare une pièce en élastomère de silicone par moulage traditionnel ;
- après démoulage on dépose, sur cette pièce en silicone, une couche mince de montmorillonite sodique, soit en l'étalant avec la main, Soit par poudrage pneumatique, soit par un procédé en lit fluidisé, soit par toute autre méthode;
- la pièce ainsi revêtue est ensuite plongée dans une solution alcoolique d'un sel coagulant les dispersions de latex, par exemple : une solution à 40% de nitrate de calcium dans l'alcool éthylique ;
- la pièce est séchée par évaporation de l'alcool, puis plongée dans une dispersion aqueuse de latex contenant in situ les produits de vulcanisation.

La durée de l'immersion est variable selon l'épaisseur du film de latex sec nécessaire.

La pièce est alors retirée du bain de latex. La dispersion est parfaitement répartie sur toutes les faces de la pièce y compris sur les arrêtes vives.

La pièce revêtue de latex est alors séchée puis immergée pendant un temps approprié dans de l'eau pure pour éliminer les sels coagulants et ensuite la pièce ainsi revêtue est séchée à l'étuve ou à l'air.

L'invention a en outre pour objet une pièce composite à base d'élastomère de silicone comportant un revêtement de latex, caractérisée en ce qu'elle comprend à l'interface, entre l'élastomère de silicone et le latex, un film formé d'une matière pulvérulente minérale hydrophile.

La présente invention trouve des applications par exemple :
- dans les industries qui utilisent les élastomères, comme par exemple les élastomères de silicone mais souhaitent protéger l'environnement du contact avec l'élastomère et de la pollution antiadhérente, notamment dans le domaine de l'élastoformage ;
- pour protéger un gel de silicone dans des applications médicales : matelas anti-escarres, prothèses mammaires, prothèses dentaires, pièces de prothèses biologiques, tubes de transfusion sanguine, artères artificielles et généralement pour tout enrobage de latex sur un support hydrophobe souple ou rigide.

L'invention pourra être mieux comprise à l'aide de l'exemple suivant, non limitatif, d'un mode de réalisation.

### EXEMPLE :

### Fabrication d'un film continu de latex par immersion sur un bloc en élastomère de silicone.

### A/ COMPOSITION DE LA MATIERE PULVERULENTE MINERALE HYDROPHILE UTILISEE :

Montmorillonite calcique permutée en Montmorillonite sodique par 3% de CO₃Na₂.
Analyse centésimale (sur un échantillon séché à 105°C) :

| | |
|---|---|
| - Perte au feu | 8,5 % |
| - SiO₂ | 59,2 % |
| - Al₂O₃ | 20,6 % |
| - Fe₂O₃ | 0,5 % |
| - MgO | 4,6 % |
| - CaO | 1,3 % |
| - Alcaline & divers | 5,3 % |
| - Granulométrie | 2 à 5 % de refus au tamis ayant une ouverture de maille de 74 micromètres. |

### B/ MODE OPERATOIRE :

1. Application par frottement de la poudre montmorillonite sodique sur toute la surface du bloc d'élastomère de silicone.
2. Immersion du bloc revêtu de poudre dans une solution alcoolique de nitrate de calcium à 40%.
3. Séchage 1 minute à 100°C.
4. Immersion du bloc dans une émulsion de latex (caoutchouc naturel) à 60 % d'extrait sec (la concentration peut être différente) pendant 3 minutes (le temps peut varier).
5. Séchage du bloc revêtu de latex coagulé pendant 1 minute à 100°C.
6. Rinçage par immersion du bloc pendant 30 minutes dans l'eau à 50°C.
7. Séchage du bloc revêtu de latex dans une enceinte ventilée à 40°C.

## Revendications

1. Procédé de dépôt d'un revêtement de latex sur une pièce en élastomère hydrophobe, caractérisé en ce que l'on dépose à la surface de l'élastomère une couche continue d'une matière pulvérulente minérale hydrophile et en ce que l'on immerge ladite pièce dans une suspension aqueuse de latex.

2. Procédé selon la revendication 1, caractérisé en ce que la matière pulvérulente minérale hydrophile est choisie parmi les montmorillonites, les silices colloïdales et les silices calcinées.

3. Procédé selon la revendication 2, caractérisé en ce que la matière pulvérulente minérale hydrophile est choisie parmi les montmorillonites sodiques.

4. Procédé selon la revendication 2, caractérisé en ce que la matière pulvérulente minérale hydrophile est une montmorillonite sodique obtenue par permutation de montmorillonites calciques par du CO₃ Na₂.

5. Procédé selon la revendication 4, caractérisé en ce que la montmorillonite sodique est obtenue par permutation d'une montmorillonite calcique par 3 % de CO₃ Na₂.

6. Procédé selon l'une quelconque des revendications précédentes, caractérisé en ce que l'on dépose la couche continue de matière pulvérulente minérale hydrophile par étalement, poudrage pneumatique électrostatique ou en lit fluidisé.

7. Procédé selon l'une quelconque des revendications 1 à 6, caractérisé en ce que l'élastomère est un élastomère de silicone.

8. Procédé selon l'une quelconque des revendications précédentes, caractérisé en ce que la pièce en élastomère hydrophobe revêtue d'une matière pulvérulente minérale hydrophile est en outre mise en contact avec une solution alcoolique d'un sel coagulant les dispersions de latex.

9. Procédé de réalisation d'une enveloppe de latex autour d'une pièce en élastomère, caractérisé par les étapes suivantes :
a) dépôt sur la pièce en élastomère de silicone d'un film d'une matière pulvérulente minérale hydrophile ;
b) immersion de la pièce dans une solution alcoolique d'un sel coagulant des dispersions de latex ;
c) séchage de la pièce ;
d) immersion dans une dispersion aqueuse de latex contenant in situ les produits de vulcanisation, et
e) rinçage, séchage et étuvage de la pièce.

10. Pièce composite à base d'élastomère de silicone comportant un revêtement de latex, caractérisée en ce qu'elle comprend à l'interface, entre l'élastomère de silicone et le latex, un film formé d'une matière pulvérulente minérale hydrophile.

## Claims

1. Process for depositing a latex coating on an article made of hydrophobic elastomer, characterized in that a continuous layer of a hydrophilic inorganic pulverulent material is deposited at the surface of the elastomer and in that the said article is immersed in an aqueous latex suspension.

2. Process according to Claim 1, characterized in that the hydrophilic inorganic pulverulent material is chosen from montmorillonites, colloidal silicas and calcined silicas.

3. Process according to Claim 2, characterized in that the hydrophilic inorganic pulverulent material is chosen from sodium montmorillonites.

4. Process according to Claim 2, characterized in that the hydrophilic inorganic pulverulent material is a sodium montmorillonite obtained by exchanging calcium montmorillonites with Na₂CO₃.

5. Process according to Claim 4, characterized in that the sodium montmorillonite is obtained by exchanging a calcium montmorillonite with 3 % of Na₂CO₃.

6. Process according to any one of the preceding claims, characterized in that the continuous layer of hydrophilic inorganic pulverulent material is deposited by spreading, electrostatic pneumatic powdering or in a fluidized bed.

7. Process according to any one of Claims 1 to 6, characterized in that the elastomer is a silicone elastomer.

8. Process according to any one of the preceding claims, characterized in that the hydrophobic-elastomer article coated with a hydrophilic inorganic pulverulent material is additionally placed in contact with an alcoholic solution of a salt coagulating latex dispersions.

9. Process for producing a latex jacket around an article made of elastomer, characterized by the following stages:
a) deposition of a film of a hydrophilic inorganic pulverulent material on the article made of silicone elastomer;
b) immersion of the article in an alcoholic solution of a salt coagulating latex dispersions;
c) drying of the article;
d) immersion in an aqueous latex dispersion containing the vulcanization products in situ, and
e) rinsing, drying and stoving of the article.

10. Composite article based on silicone elastomer comprising a latex coating, characterized in that it includes a film made up of a hydrophilic inorganic pulverulent material at the interface between the silicone elastomer and the latex.

## Patentansprüche

1. Verfahren zum Aufbringen eines Überzugs aus Latex auf ein Bauteil aus einem hydrophoben Elastomermaterial, dadurch gekennzeichnet, daß man auf die Oberfläche des Elastomermaterials eine durchgehende Schicht aus einem hydrophilen feinpulvrigen Mineralmaterial aufbringt und daß man das besagte Bauteil in eine wässrige Latexsuspension taucht.

2. Verfahren nach Anspruch 1, dadurch gekennzeichnet, daß das hydrophile feinpulvrige Mineralmaterial aus Montmorilloniten, kolloidalen Kieselerden und kalzinierten Kieselerden gewählt wird.

3. Verfahren nach Anspruch 2, dadurch gekennzeichnet, daß das hydrophile feinpulvrige Mineralmaterial unter den natriumhaltigen Montmorilloniten gewählt wird.

4. Verfahren nach Anspruch 2, dadurch gekennzeichnet, daß das hydrophile feinpulvrige Mineralmaterial ein natriumhaltiger Montmorillonit ist, der durch Umsetzen von kalzinierten Montmorilloniten mit CO₃ Na₂ erhalten wird.

5. Verfahren nach Anspruch 4, dadurch gekennzeichnet, daß der natriumhaltige Montmorillonit durch Umsetzung eines kalzinierten Montmorilloniten mit 3 % CO₃ Na₂ erhalten wird.

6. Verfahren nach einem der vorhergehenden Ansprüche, dadurch gekennzeichnet, daß die durchgehende Schicht aus dem hydrophilen feinpulvrigen Mineralmaterial durch Auftragen, pneumatisches elektrostatisches Aufstäuben oder im Fließbett aufgebracht wird.

7. Verfahren nach einem der Ansprüche 1 bis 6, dadurch gekennzeichnet, daß das elastomere Material ein elastomeres Siliconmaterial ist.

8. Verfahren nach einem der vorhergehenden Ansprüche, dadurch gekennzeichnet, daß das Bauteil aus einem hydrophoben elastomeren Material, das mit einem hydrophilen feinpulvrigen Mineralmaterial überzogen ist, zusätzlich mit einer alkoholischen Lösung eines Salzes in Kontakt gebracht wird, das Latexdispersionen koaguliert.

9. Verfahren zum Herstellen eines Latexmantels um ein Bauteil aus einem elastomeren Material, gekennzeichnet durch die folgenden Schritte:
a) Aufbringen einer dünnen Schicht aus einem hydrophilen feinpulvrigen Mineralmaterial auf das Bauteil aus einem elastomeren Siliconmaterial,
b) Eintauchens des Bauteils in eine alkoholische Lösung eines Salzes, das Latexdispersionen koaguliert,
c) Trocknen des Bauteils,
d) Eintauchen in eine wässrige Latexdispersion, die in situ Vulkanisationsprodukte enthält, und
e) Spülen, Trocknen und Warmbehandeln des Bauteils.

10. Verbundbauteil auf der Basis eines elastomeren Siliconmaterials mit einem Latexüberzug, dadurch gekennzeichnet, daß es an der Zwischenfläche zwischen dem elastomeren Siliconmaterial und dem Latex eine dünne Schicht umfaßt, die aus einem hydrophilen feinpulvrigen Mineralmaterial gebildet ist.
